# EUROPEAN PATENT APPLICATION

(11) **EP 4 572 260 A1**
(43) Date of publication of application: **18.06.2025**
(21) Application number: 22954671.8
(22) Date of filing: 12.08.2022
(51) Int. Cl.: H04L 27/00

(54) **METHOD FOR DETECTING SCHEDULING SIGNALING, AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/112323
(87) International publication number: WO 2024/031721

(57) **Abstract**

Embodiments of the present application relate to the technical field of communications, and disclose a method for detecting scheduling signaling, and an apparatus. The method comprises: determining an interval of scheduling signaling, wherein within the interval, a terminal device does not perform detection on the scheduling signaling scheduling the same HARQ process transmission. According to the implementation of the embodiments of the present application, setting the interval of scheduling signaling for the terminal device enables the terminal device not to frequently perform scheduling signaling detection on the same HARQ process, so that the detection complexity of the terminal device is reduced, and the detection capability of the terminal device would not be reduced due to low detection frequency, thereby achieving a consideration of both the detection complexity and the detection capability of the terminal device.

## Description

### FIELD

The present disclosure relates to the field of communication technology, in particular to a method and an apparatus for detecting a scheduling signaling.

### BACKGROUND

In a process of dynamically scheduling a terminal device by a network device, the terminal device detects its own scheduling signaling in a downlink time domain unit. The more the quantity of detections performed by the terminal device, the better the detection performance for the detected signaling, but a detection complexity and power consumption of the terminal device increase accordingly.

### SUMMARY

The present disclosure provides in some embodiments a method and an apparatus for detecting a scheduling signaling. An interval for the scheduling signaling is set for a terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

In a first aspect, the present disclosure provides in some embodiments a method for detecting a scheduling signaling, executed by a terminal device, including: determining an interval for the scheduling signaling; and not performing detection on the scheduling signaling for scheduling a transmission of the same hybrid automatic repeat request (HARQ) process within the interval.

In the embodiments of the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

In a second aspect, the present disclosure provides in some embodiments a method for detecting a scheduling signaling, executed by a network device, including: determining an interval for the scheduling signaling; and indicating the interval to a terminal device, wherein the terminal device does not perform detection on the scheduling signaling for scheduling a transmission of the same HARQ process within the interval.

In the embodiments of the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

In a third aspect, the present disclosure provides in some embodiments a communication apparatus. The communication apparatus has a part of, or all of, functions of the terminal device in the above-mentioned method in the first aspect, e.g., the functions of the communication apparatus include the functions in a part of, or all of, the embodiments of the present disclosure, or a function of any of the embodiments of the present disclosure. The functions may be implemented via hardware, or implemented via executing, by hardware, corresponding software. The hardware or software includes one or more units or modules corresponding to the above-mentioned functions.

In a possible embodiment of the present disclosure, the communication apparatus includes a transceiver module and a processing module. The processing module is configured to support the communication apparatus to execute the corresponding function in the above-mentioned method, and the transceiver module is configured to support a communication between the communication apparatus and the other device. The communication apparatus further includes a storage module, and the storage module is coupled to the transceiver module and the processing module and configured to store therein necessary computer programs and data for the communication apparatus.

For example, the processing module is a processor, the transceiver module is a transceiver or a communication interface, and the storage module is a memory.

In a fourth aspect, the present disclosure provides in some embodiments another communication apparatus. The communication apparatus has a part of, or all of, functions of the terminal device in the above-mentioned method in the second aspect, e.g., the functions of the communication apparatus include the functions in a part of, or all of, the embodiments of the present disclosure, or a function of any of the embodiments of the present disclosure. The functions may be implemented via hardware, or implemented via executing, by the hardware, corresponding software. The hardware or software includes one or more units or modules corresponding to the above-mentioned functions.

In a possible embodiment of the present disclosure, the communication apparatus includes a transceiver module and a processing module. The processing module is configured to support the communication apparatus to execute the corresponding function in the above-mentioned method, and the transceiver module is configured to support a communication between the communication apparatus and the other device. The communication apparatus further includes a storage module, and the storage module is coupled to the transceiver module and the processing module and configured to store therein necessary computer programs and data for the communication apparatus.

In a fifth aspect, the present disclosure provides in some embodiments a communication apparatus, including a processor. The processor is configured to call a computer program in a memory, so as to implement the method in the first aspect.

In a sixth aspect, the present disclosure provides in some embodiments a communication apparatus, including a processor. The processor is configured to call a computer program in a memory, so as to implement the method in the second aspect.

In a seventh aspect, the present disclosure provides in some embodiments a communication apparatus, including a processor and a memory. The memory is configured to store therein a computer program, and the processor is configured to execute the computer program in the memory to implement the above-mentioned method in the first aspect.

In an eighth aspect, the present disclosure provides in some embodiments a communication apparatus, including a processor and a memory. The memory is configured to store therein a computer program, and the processor is configured to execute the computer program in the memory to implement the above-mentioned method in the second aspect.

In a ninth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned method in the first aspect.

In a tenth aspect, the present disclosure provides in some embodiments a communication apparatus, including a processor and an interface circuit. The interface circuit is configured to receive a code instruction and transmit the code instruction to the processor, and the processor is configured to execute the code instruction to implement the above-mentioned method in the second aspect.

In an eleventh aspect, the present disclosure provides in some embodiments a system for detecting a scheduling signaling, including the communication apparatus in the third aspect and the communication apparatus in the fourth aspect, or including the communication apparatus in the fifth aspect and the communication apparatus in the sixth aspect, or including the communication apparatus in the seventh aspect and the communication apparatus in the eighth aspect, or including the communication apparatus in the ninth aspect and the communication apparatus in the tenth aspect.

In a twelfth aspect, the present disclosure provides in some embodiments a computer-readable storage medium storing therein an instruction for the above-mentioned terminal device. The instruction is executed to implement the method in the first aspect.

In a thirteenth aspect, the present disclosure provides in some embodiments a computer-readable storage medium storing therein an instruction for the above-mentioned network device. The instruction is executed to implement the method in the second aspect.

In a fourteenth aspect, the present disclosure provides in some embodiments a computer program product including a computer program. The computer program is executed by a computer to implement the method in the first aspect.

In a fifteenth aspect, the present disclosure provides in some embodiments a computer program product including a computer program. The computer program is executed by a computer to implement the method in the second aspect.

In a sixteenth aspect, the present disclosure provides in some embodiments a chip system, including at least one processor and an interface, and configured to support the terminal device to achieve functions involved in the first aspect, e.g., determine or process at least one of data or information involved in the above-mentioned method. In a possible design, the chip system further includes a memory, and the memory is configured to store therein a computer program and data desired for the terminal device. The chip system includes a chip, or includes a chip and other discrete elements.

In a seventeenth aspect, the present disclosure provides in some embodiments a chip system, including at least one processor and an interface, and configured to support the network device to achieve functions involved in the second aspect, e.g., determine or process at least one of data or information involved in the above-mentioned method. In a possible design, the chip system further includes a memory, and the memory is configured to store therein a computer program and data desired for the network device. The chip system includes a chip, or includes a chip and other discrete elements.

In an eighteenth aspect, the present disclosure provides in some embodiments a computer program. The computer program is executed by a computer to implement the above-mentioned method in the first aspect.

In a nineteenth aspect, the present disclosure provides in some embodiments a computer program. The computer program is executed by a computer to implement the above-mentioned method in the second aspect.

### BRIEF DESCRIPTION OF THE DRAWINGS

In order to illustrate the technical solutions of the embodiments of the present disclosure or the background in a clearer manner, the drawings desired for the embodiments of the present disclosure or the background will be described hereinafter briefly.
FIG. 1 is a schematic view showing an architecture of a communication system according to an embodiment of the present disclosure.
FIG. 2 is a flowchart of a method for detecting a scheduling signaling according to an embodiment of the present disclosure.
FIG. 3 is a schematic diagram showing the detection of the scheduling signaling according to an embodiment of the present disclosure.
FIG. 4 is a flowchart of the method for detecting the scheduling signaling according to an embodiment of the present disclosure.
FIG. 5 is a flowchart of the method for detecting the scheduling signaling according to an embodiment of the present disclosure.
FIG. 6 is a schematic diagram showing the detection of the scheduling signaling according to an embodiment of the present disclosure.
FIG. 7 is a flowchart of the method for detecting the scheduling signaling according to an embodiment of the present disclosure.
FIG. 8 is a flowchart of the method for detecting the scheduling signaling according to an embodiment of the present disclosure.
FIG. 9 is a block diagram of a communication apparatus according to an embodiment of the present disclosure.
FIG. 10 is a block diagram of the communication apparatus according to an embodiment of the present disclosure.
FIG. 11 is a schematic diagram showing a chip according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in the embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "in a case that ...", "in the case that ..." or "in response to determining that ...". For clarification and for ease of understanding, the expressions "greater/smaller than" and "higher/lower than" used in a case of representing a relationship of size. However, it should be appreciated that, the expression "greater than" also covers the meaning of "greater than or equal to", the expression "smaller than" also covers the meaning of "smaller than or equal to", the expression "higher than" also covers the meaning of "higher than or equal to", and the expression "lower than" also covers the meaning of "lower than or equal to".

For ease of understanding, the terms involved in the present disclosure will be described hereinafter at first.

HARQ: it is a technology formed via combining forward error correction (FEC) and automatic repeat reQuest (ARQ).

In order to understand a method for detecting a scheduling signaling in the embodiments of the present disclosure in a better manner, an applicable communication system will be described hereinafter at first.

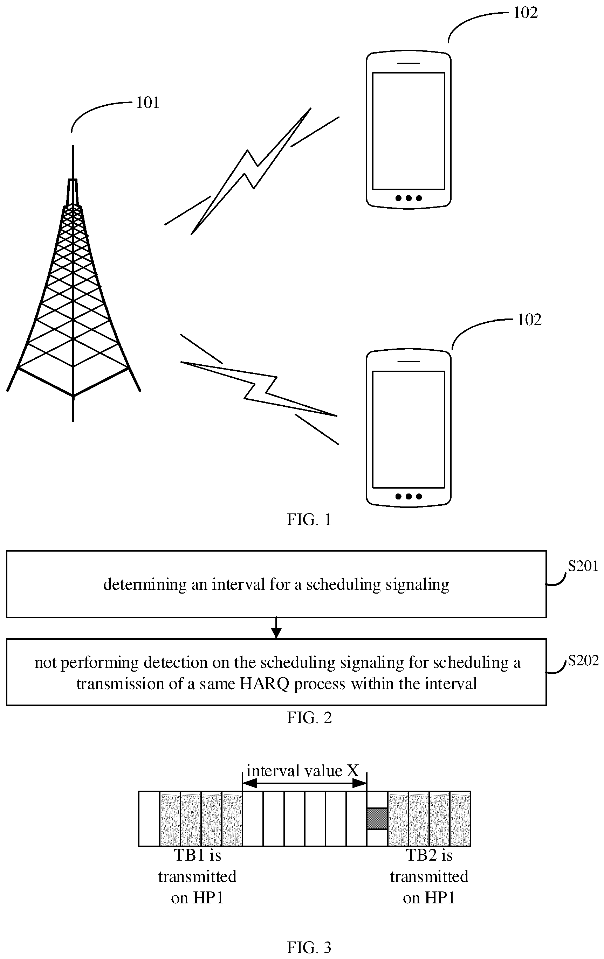

Referring to FIG. 1 which is a schematic view showing the architecture of a communication system provided in the embodiments of the present disclosure, the communication system includes, but is not limited to, a network device and a terminal device. Quantities and forms of the devices in FIG. 1 are for illustrative purposes only, but shall not be construed as limiting the embodiments of the present disclosure. In actual use, the communication system may include two or more network devices, and two or more terminal devices. For example, as shown in FIG. 1, the communication system includes one network device 101, and one terminal device 102.

It should be appreciated that, the technical solutions in the embodiments of the present disclosure may be applied to various communication systems, e.g., a long term evolution (LTE) system, a 5^{th}-Generation (5G) mobile communication system, a 5G new radio (NR) system, or any novel mobile communication system that may occur in the future. It should be further appreciated that, Sidelink in the embodiments of the present disclosure may also be called as direct communication link.

In the embodiments of the present disclosure, the network device 101 is an entity at a network side for sending or receiving a signal. For example, the network device 101 is an evolved NodeB (eNB), a transmission reception point (TRP), a next generation NodeB (gNB) in the NR system, a base station in the future mobile communication system, or an access point in a wireless fidelity (WiFi) system. A specific technology adopted by the network device and a specific device form thereof will not be particularly defined herein. The network device in the embodiments of the present disclosure may consist of a central unit (CU) and a distributed unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the terminal device 102 is an entity at a user side for receiving or sending a signal, e.g., a mobile phone. The terminal device may also be called as terminal, user equipment (UE), mobile station (MS), mobile terminal (MT), etc. The terminal device may be a vehicle having a communication function, a smart vehicle, a mobile phone, a wearable device, a pad, a computer having a wireless transceiver function, a virtual reality (VR) terminal, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present disclosure, a specific technology adopted by the terminal device and a specific device form thereof will not be particularly defined.

In Sidelink communication, there are four Sidelink transmission modes. A Sidelink transmission mode 1 and a Sidelink transmission mode 2 are used for device-to-device (D2D) communication, and a Sidelink transmission mode 3 and a Sidelink transmission mode 4 are used for V2X communication. In a case that the Sidelink transmission mode 3 is adopted, resource allocation is scheduled by the network device 101. To be specific, the network device 101 sends resource allocation information to the terminal device 102, and then the terminal device 102 allocates resources for another terminal device, so that the other terminal device sends information to the network device 101 using the allocated resources. In the V2X communication, a terminal device with better signal or high reliability is used as the terminal device 102. A first terminal device involved in the embodiments of the present disclosure refers to the terminal device 102, and a second terminal device refers to another terminal device.

It should be appreciated that, the communication system described herein is used to describe the technical solutions in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

It should be appreciated that, a method for detecting a scheduling signaling provided in any embodiment of the present disclosure may be performed individually, or performed in combination with a possible method in the other embodiments, or performed in combination with any technical solution in the art.

A method for detecting a scheduling signaling and an apparatus provided in the embodiments of the present disclosure will be described hereinafter in details in conjunction with the drawings.

Referring to FIG. 2 which is a flowchart of a method for detecting a scheduling signaling provided in an embodiment of the present disclosure, the method is executed by a terminal device. The method includes, but is not limited to, the following steps.

S201: an interval for a scheduling signaling is determined.

S202: detection is not performed on the scheduling signaling for scheduling a transmission of the same HARQ process within the interval.

In a process of dynamically scheduling, by a network device, a data transmission of the terminal device, one scheduling signaling includes scheduling information about one or more time domain units, and the scheduling information is used to schedule data carriers for the one or more time domain units. For example, in a case that the scheduling signaling is a downlink scheduling signaling, the terminal device schedules one time domain unit for data reception based on the scheduling signaling. The time domain unit is in unit of orthogonal frequency division multiplexing (OFDM) symbol, slot, subframe or radio frame.

Optionally, in the process of dynamically scheduling the terminal device, the terminal device feeds back a HARQ reception condition to the network device. The network device determines idle HARQ processes sequentially, generates a HARQ process number (HPN) based on each idle HARQ process, and sends the scheduling signaling carrying the HPNs to the terminal device. Further, upon the receipt of the scheduling signaling, the terminal device determines whether to receive or transmit channel data scheduled via the scheduling signaling on a corresponding HARQ process sequentially based on the HPNs carried in the scheduling signaling.

In the embodiments of the present disclosure, in order to reduce the detection complexity and the power consumption of the terminal device, one interval may be determined for the terminal device, and within this interval, the terminal device does not perform the detection on the scheduling signaling for the same HARQ process. Two adjacent detections performed by the terminal device on the scheduling signaling for the same HARQ process need to be spaced apart from each other by a certain quantity of time domain units. For example, the interval includes N subframes, M OFDM symbols, K slots, or L radio frames.

In the embodiments of the present disclosure, the terminal device determines the interval for the scheduling signaling based on a protocol and/or an indication from a network.

Optionally, the terminal device determines the interval for the scheduling signaling based on an agreement in the protocol. In some embodiments of the present disclosure, a candidate interval is agreed in the protocol, and the terminal device determines the candidate interval as the interval.

Optionally, the terminal device determines the interval for the scheduling signaling based on first indication information. In some embodiments of the present disclosure, a first interval set is agreed in the protocol, and the first interval set includes one or more candidate intervals. Further, the terminal device receives the first indication information sent by the network device, and determines the interval from the interval set based on the first indication information. Optionally, an index value of a certain candidate interval in the first interval set is carried in the first indication information, and the terminal device determines the candidate interval indicated by the index value as the interval for detecting the scheduling signaling. Optionally, a certain candidate interval in the first interval set is indicated in the first indication information via a bitmap. For example, the first indication information is downlink control information (DCI).

Optionally, the terminal device determines the interval for the scheduling signaling based on second indication information. In some embodiments of the present disclosure, the terminal device receives the second indication information sent by the network device, and the second indication information includes the interval configured for the terminal device for detecting the scheduling signaling. It should be appreciated that, the second indication information may be a radio resource control (RRC) signaling, a media access control-control element (MAC-CE) signaling, or any other high layer signaling, which will not be particularly defined herein.

Optionally, the terminal device determines the interval for the scheduling signaling based on third indication information and fourth indication information. In some embodiments of the present disclosure, the terminal device receives the third indication information sent by the network device, and the third indication information carries a second interval set configured by the network device for the terminal device. The second interval set includes one or more candidate intervals. The third indication information is a RRC signaling, a MAC-CE signaling or any other high layer signaling, which will not be particularly defined herein. Further, the terminal device receives the fourth indication information sent by the network device, and determines the interval from the second interval set based on the fourth indication information. Optionally, the fourth indication information carries an index value of a certain candidate interval in the second interval set, and the terminal device determines the candidate interval indicated by the index value as the interval for detecting the scheduling signaling. Optionally, the fourth indication information indicates a certain candidate interval in the second interval set via a bitmap. For example, the fourth indication information is DCI.

In the embodiments of the present disclosure, the above-mentioned four indication information may be used separately or in combination. The first interval set and the second interval set may be the same set or different sets.

It should be appreciated that, the first indication information, the second indication information, the third indication information and the fourth indication information may also be sent by the network device to the terminal device via a physical layer signaling. For example, the physical layer signaling is a scheduling signaling.

In the embodiments of the present disclosure, the terminal device receives a physical layer signaling or a high layer signaling, and determines one of the first indication information to the fourth indication information in the physical layer signaling or high layer signaling. In some embodiments of the present disclosure, one of the first indication information to the fourth indication information is carried in a designated information field of the physical layer signaling or high layer signaling, and correspondingly, upon the receipt of the physical layer signaling or high layer signaling, the terminal device obtains the one of the first indication information to the fourth indication information in the designated information field. In some other embodiments of the present disclosure, one of the first indication information to the fourth indication information is carried in a configurable information field of the physical layer signaling or high layer signaling, and correspondingly, upon the receipt of the physical layer signaling or high layer signaling, the terminal device obtains the one of the first indication information to the fourth indication information in the configurable information field. The configurable information field is a free information field or a reusable information field in the physical layer signaling or high layer signaling.

In the embodiments of the present disclosure, the interval set includes a plurality of candidate intervals. In order to indicate a specific interval, a quantity of bits of the information field to be occupied by one of the first indication information to the fourth indication information is associated with a quantity of intervals in the interval set. For example, in a case that the interval set includes 8 candidate intervals, 3 bits need to be occupied to indicate a specific interval, and in a case that the interval set includes 4 candidate intervals, 2 bits need to be occupied to indicate a specific interval.

Optionally, the terminal device stops detecting the scheduling signaling for the same HARQ process at the beginning of a first time domain unit where a reception of a transmission block (TB) transmitted on a physical downlink shared channel (PDSCH) is ended, and detects the scheduling signaling for the HARQ process again in a second time domain unit where the detection on the scheduling signaling for the HARQ process is to be detected again. In other words, the terminal device determines a time domain unit between the second time domain unit and the first time domain unit as the interval.

A HARQ process, e.g., HP1, is configured for the terminal device. As shown in FIG. 3, an interval determined by the terminal device and used for detecting a scheduling signaling for not scheduling a transmission of HP1 is X. The terminal device transmits TB1 on HP1, and after the transmission of TB1 is ended, the terminal device does not detect the scheduling signaling for HP1 within the interval X in the time domain.

In the embodiments of the present disclosure, the terminal device determines the interval for the scheduling signaling, and does not perform the detection on the scheduling signaling for scheduling the transmission of the same HARQ process within the interval. In the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

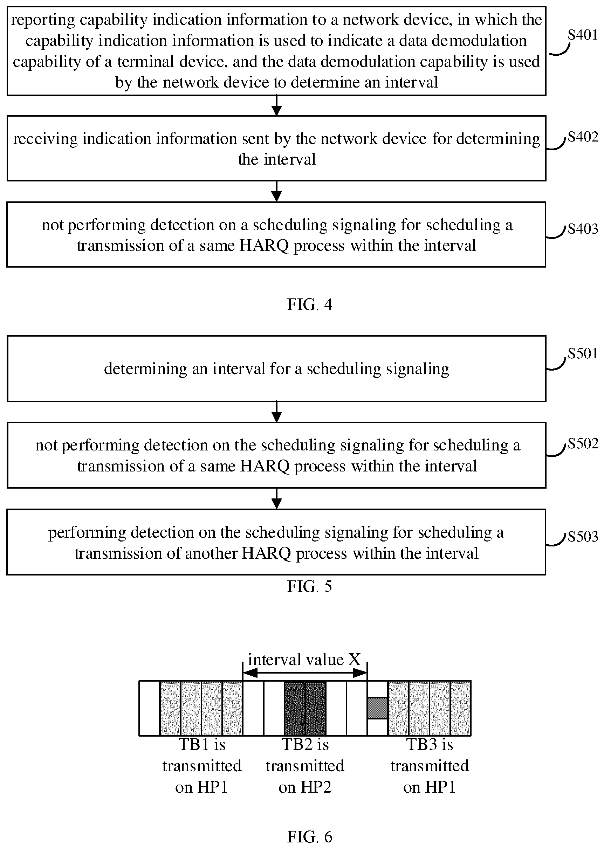

Referring to FIG. 4 which is a flowchart of a method for detecting a scheduling signaling provided in an embodiment of the present disclosure, this method is executed by a network device. The method includes, but is not limited to, the following steps.

S401: capability indication information is reported to a network device, the capability indication information is used to indicate a data demodulation capability of the terminal device, and the data demodulation capability is used by the network device to determine an interval.

Optionally, the data demodulation capability of the terminal device is determined based on a hardware capability of the terminal device.

Optionally, the terminal device reports the capability indication information to the network device on its own initiative. In some embodiments of the present disclosure, the terminal device reports the capability indication information to the network device in an initial access procedure, and in some other embodiments of the present disclosure, the terminal device reports the capability indication information to the network device after the initial access procedure.

Optionally, the terminal device receives request information sent by the network device, and the request information is used to request the terminal device to report the capability indication information to the network device. Upon the receipt of the request information, the terminal device reports the capability indication information to the network device.

In the embodiments of the present disclosure, upon the receipt of the capability indication information, the network device determines the data demodulation capability of the terminal device, and then determines an appropriate interval for the terminal device based on the data demodulation capability. In this way, the terminal device does not need to perform the detection frequently, so as to reduce the detection complexity, and prevent the detection capability of the terminal device from being reduced due to a low detection frequency.

S402: indication information for determining the interval sent by the network device is received.

Optionally, after the network device has determined the interval, the terminal device receives the interval sent by the network device. In some embodiments of the present disclosure, the terminal device receives a signaling from the network device, and the signaling carries the interval. In some other embodiments of the present disclosure, the terminal device determines an interval set configured via a signaling, and further receives another signaling for indicating a certain interval in the interval set. The interval is just an appropriate interval determined by the network device for the terminal device based on the data demodulation capability.

A specific process of indicating, by the network device, the interval to the terminal device may refer to the relevant contents in the above embodiments, and thus will not be particularly defined herein.

S403: detection is not performed on the scheduling signaling for scheduling a transmission of the same HARQ process within the interval.

Specific description about S403 may refer to the relevant contents in the above embodiments of the present disclosure, and thus will not be particularly defined herein.

In the embodiments of the present disclosure, the terminal device determines the interval for the scheduling signaling, and does not perform the detection on the scheduling signaling for scheduling the transmission of the same HARQ process within the interval. In the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

Referring to FIG. 5 which is a flowchart of a method for detecting a scheduling signaling provided in an embodiment of the present disclosure, this method is executed by a terminal device. The method includes, but is not limited to, the following steps.

S501: an interval for the scheduling signaling is determined.

S502: detection is not performed on the scheduling signaling for scheduling a transmission of the same HARQ process within the interval.

Specific description about S501 and S502 may refer to relevant contents in the above-mentioned embodiments of the present disclosure, and thus will not be particularly defined herein.

S503: detection is performed on a scheduling signaling for scheduling a transmission of another HARQ process within the interval.

In some embodiments of the present disclosure, two or more HARQ processes are configured for the terminal device. In a case that a plurality of HARQ processes is configured for the terminal device, the terminal device detects the scheduling signaling for each HARQ process based on a timing sequence. Within the interval, the terminal device does not detect the scheduling signaling for scheduling the transmission of the same HARQ process, but it detects the scheduling signaling for scheduling the transmission of the other HARQ processes.

For example, two HARQ processes, i.e., HARQ process 1 (HP1) and HARQ process 2 (HP2), are configured for the terminal device. As shown in FIG. 6, an interval for detecting, by the terminal device, the scheduling signaling for the same HARQ process is X. The network device transmits TB1 to the terminal device on HP1. After the reception of TB1 is ended, the terminal device needs to detect the scheduling signaling for HP1 within the interval X, and continuously receive TB3 transmitted on HP1 in a next time domain unit. In this example, the network device detects the scheduling signaling for HP2 within the interval X, and receives TB2 transmitted on HP2.

In the embodiments of the present disclosure, the terminal device determines the interval for the scheduling signaling, does not perform the detection on the scheduling signaling for scheduling the transmission of the same HARQ process within the interval, and performs the detection on the scheduling signaling for the other HARQ process within the interval. In the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability. Further, the scheduling signaling for the other HARQ process is detected within the interval, so as to perform the transmission of the other HARQ process normally, and prevent the occurrence of data loss.

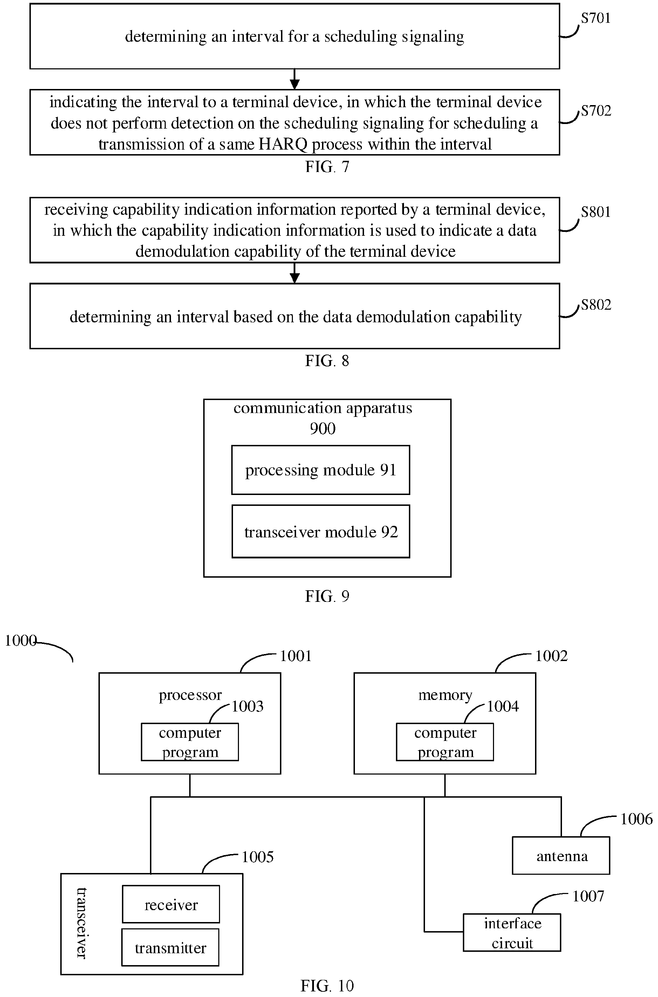

Referring to FIG. 7 which is a flowchart of a method for detecting a scheduling signaling provided in an embodiment of the present disclosure, this method is executed by a network device. The method includes, but is not limited to, the following steps.

S701: an interval for the scheduling signaling is determined.

S702: the interval is indicated to a terminal device, and the terminal device does not perform detection on the scheduling signaling for scheduling a transmission of the same HARQ process within the interval.

In the embodiments of the present disclosure, in order to reduce the detection complexity and the power consumption of the terminal device, the network device determines an interval for the scheduling signaling for the terminal device, and indicates the interval to the terminal device. The terminal device does not perform the detection on the scheduling signaling for the same HARQ process within the interval.

Optionally, the network device determines the interval for the scheduling signaling for the terminal device based on an agreement in a protocol or a data demodulation capability of the terminal device.

Optionally, the network device sends first indication information to the terminal device, and the first indication information is used to indicate the terminal device to determine the interval for the scheduling signaling from a first interval set in the agreement in the protocol. In some embodiments of the present disclosure, the first interval set is agreed in the protocol, and it includes one or more candidate intervals. Further, the network device sends the first indication information to the terminal device, and the terminal device determines the interval from the first interval set based on the first indication information. Optionally, the first indication information carries an index value of a certain candidate interval in the first interval set, and the terminal device determines the candidate interval indicated by the index value as the interval for detecting the scheduling signaling. Optionally, the first indication information indicate a certain candidate interval in the first interval set via a bitmap.

Optionally, the network device determines the interval for the scheduling signaling based on second indication information. In some embodiments of the present disclosure, the network device sends the second indication information to the terminal device, and the second indication information includes the interval configuring for the terminal device to detect the scheduling signaling. The second indication information is a RRC signaling, a MAC-CE signaling, or any other high layer signaling, which will not be particularly defined herein.

Optionally, the network device indicates the interval for the scheduling signaling to the terminal device based on third indication information and fourth indication information. In some embodiments of the present disclosure, the network device sends the third indication information to the terminal device, and the third indication information carries a second interval set configured by the network device for the terminal device. The second interval set includes one or more candidate intervals. The third indication information is a RRC signaling, a MAC-CE signaling or any other high layer signaling, which will not be particularly defined herein.

Further, the network device sends the fourth indication information to the terminal device, and the terminal device determines the interval from the second interval set based on the fourth indication information. Optionally, the fourth indication information carries an index value of a certain candidate interval in the second interval set, and the terminal device determines the candidate interval indicated by the index value as the interval for detecting the scheduling signaling. Optionally, the fourth indication information indicates a certain candidate interval in the second interval set via a bitmap. For example, the fourth indication information is DCI.

It should be appreciated that, the first indication information, the second indication information, the third indication information and the fourth indication information are sent by the network device to the terminal device via a physical layer signaling. For example, the physical layer signaling is a scheduling signaling.

In the embodiments of the present disclosure, the network device sends a physical layer signaling or a high layer signaling to the terminal device, and one of the first indication information to the fourth indication information is carried in the physical layer signaling or high layer signaling. In some embodiments of the present disclosure, one of the first indication information to the fourth indication information is carried in a designated information field of the physical layer signaling or high layer signaling, and correspondingly, upon the receipt of the physical layer signaling or high layer signaling, the terminal device obtains the one of the first indication information to the fourth indication information in the designated information field. In some other embodiments of the present disclosure, one of the first indication information to the fourth indication information is carried in a configurable information field of the physical layer signaling or high layer signaling, and correspondingly, upon the receipt of the physical layer signaling or high layer signaling, the terminal device obtains the one of the first indication information to the fourth indication information in the configurable information field. The configurable information field is a free information field or a reusable information field in the physical layer signaling or high layer signaling.

In the embodiments of the present disclosure, the interval set includes a plurality of candidate intervals. In order to indicate a specific interval, a quantity of bits of the information field to be occupied by one of the first indication information to the fourth indication information is associated with a quantity of intervals in the interval set. For example, in a case that the interval set includes 8 candidate intervals, 3 bits need to be occupied to indicate a specific interval, and in a case that the interval set includes 4 candidate intervals, 2 bits need to be occupied to indicate a specific interval.

Optionally, the network device indicates the terminal device to stop detecting the scheduling signaling for the same HARQ process at the beginning of a first time domain unit where a reception of a TB transmitted on a PDSCH is ended, and to detect the scheduling signaling for the HARQ process again in a second time domain unit where the detection on the scheduling signaling for the HARQ process is to be detected again. In other words, the terminal device determines a time domain unit between the second time domain unit and the first time domain unit as the interval.

A HARQ process, e.g., HP1, is configured for the terminal device. As shown in FIG. 3, the terminal device transmits TB1 on HP1, and after the transmission of TB1 is ended, the terminal device does not detect the scheduling signaling for HP1 within the interval in the time domain.

In the embodiments of the present disclosure, the network device determines the interval for the scheduling signaling, and indicates the interval to the terminal device, so that the terminal device does not perform the detection on the scheduling signaling for scheduling the transmission of the same HARQ process within the interval. In the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

Referring to FIG. 8 which is a flowchart of a method for detecting a scheduling signaling provided in an embodiment of the present disclosure, this method is executed by a network device. The method includes, but is not limited to, the following steps.

S801: capability indication information reported by a terminal device is received, and the capability indication information is used to indicate a data demodulation capability of the terminal device.

S802: an interval is determined based on the data demodulation capability.

Optionally, the data demodulation capability of the terminal device is determined based on a hardware capability of the terminal device.

Optionally, the network device receives the capability indication information reported by the terminal device on its own initiative. In some embodiments of the present disclosure, the network device receives the capability indication information reported by the terminal device in an initial access procedure. In some other embodiments of the present disclosure, the network device receives the capability indication information reported by the terminal device after the initial access procedure.

Optionally, the network device sends request information to the terminal device, and the request information is used to request the terminal device to report the capability indication information to the network device. Further, upon receipt of the request information, the terminal device reports the capability indication information to the network device, and correspondingly, the network device receives the capability indication information reported by the terminal device based on the request information.

In the embodiments of the present disclosure, upon the receipt of the capability indication information, the network device determines the data demodulation capability of the terminal device, and then determines an appropriate interval for the terminal device based on the data demodulation capability. In this way, the terminal device does not need to perform the detection frequently, so as to reduce the detection complexity, and prevent the detection capability of the terminal device from being reduced due to a low detection frequency.

S803: the interval is indicated to the terminal device, and the terminal device does not perform detection on the scheduling signaling for scheduling a transmission of the same HARQ process within the terminal device.

Specific description about S803 may refer to the relevant contents in the above-mentioned embodiments of the present disclosure, and thus will not be particularly defined herein.

In the embodiments of the present disclosure, the interval for the scheduling signaling is determined and indicated to the terminal device, and the terminal device does not perform the detection on the scheduling signaling for scheduling the transmission of the same HARQ process within the interval. In the present disclosure, the interval for the scheduling signaling is set for the terminal device, and the terminal device does not need to detect the scheduling signaling for the same HARQ process frequently, so as to reduce the detection complexity of the terminal device, and prevent a detection capability of the terminal device from being reduced due to a low detection frequency, thereby to take account of both the detection complexity of the terminal device and the detection capability.

In the above embodiments of the present disclosure, the methods have been described from the perspectives of the network device and the terminal device. In order to achieve various functions in the embodiments of the present disclosure, each of the network device and the terminal device includes a hardware structure and a software module, i.e., the functions are achieved in the form of the hardware structure, the software module, or a combination thereof. A certain function in these functions is executed via the hardware structure, the software module, or a combination thereof.

The present disclosure further provides in some embodiments a communication apparatus 900. The communication apparatus 900 may be a terminal device (e.g., the terminal device in the above-mentioned method embodiments), an apparatus in the terminal device, or an apparatus capable of being used in combination with the terminal device. Alternatively, the communication apparatus 900 may be a network device, an apparatus in the network device, or an apparatus capable of being used in combination with the network device.

In a case that the communication apparatus 900 is a terminal device (e.g., the terminal device in the above-mentioned method embodiments), the communication apparatus includes a processing module 92. The processing module 92 is configured to determine an interval for a scheduling signaling, and not perform detection on the scheduling signaling for scheduling a transmission of the same HARQ process within the interval.

Optionally, the processing module 92 is further configured to determine the interval based on an agreement in a protocol and/or an indication from a network.

Optionally, the processing module 92 is further configured to determine a candidate interval in the agreement in the protocol as the interval; or determine a first interval set in the agreement in the protocol, receive first indication information, and determine the interval from the first interval set based on the first indication information.

Optionally, the processing module 92 is further configured to receive second indication information sent by a network device, and determine the interval based on the second indication information.

Optionally, the processing module 92 is further configured to: receive third indication information sent by the network device, and determine a second interval set configured for the terminal device based on the third indication information; and receive fourth indication information sent by the network device, and determine the interval from the second interval set based on the fourth indication information.

Optionally, the processing module 91 is further configured to receive a high layer signaling or a physical layer signaling sent by the network device, and determine indication information in the high layer signaling or physical layer signaling. The indication information is one of the first indication information to the fourth indication information.

Optionally, the processing module 91 is further configured to determine the indication information in a designated information field or a configurable information field of the high layer signaling or physical layer signaling.

Optionally, the processing module 91 is further configured to: determine a first time domain unit where a previous reception of a TB transmitted on a PDSCH is ended; determine a second time domain unit where a scheduling signaling for the same HARQ process starts to be detected again; and determine a time domain unit between the second time domain unit and the first time domain unit as the interval.

Optionally, the processing module 91 is further configured to report capability indication information to the network device, the capability indication information is used to indicate a data demodulation capability of the terminal device, and the data demodulation capability is used by the network device to determine the interval.

Optionally, the processing module 91 is further configured to: receive request information sent by the network device, and report the capability indication information to the network device based on the request information; or in an initial access procedure or after the initial access procedure, initiatively report the capability indication information to the network device.

In a case that the communication apparatus 90 is a network device, the communication apparatus 90 includes a processing module 91 and a transceiver module 92. The processing module 91 is configured to determine an interval for a scheduling signaling. The transceiver module 92 is configured to indicate the interval to a terminal device, and the terminal device does not perform detection on the scheduling signaling for scheduling a transmission of the same HARQ process within the interval.

The transceiver module 92 is further configured to: indicate the terminal device to determine the interval from a first interval set in an agreement in a protocol based on first indication information; or indicate the interval to the terminal device based on second indication information; or indicate the interval to the terminal device based on third indication information and fourth indication information.

The transceiver module 92 is further configured to: send the third indication information to the terminal device, wherein the third indication information is used to configure a second interval set for the terminal device; and send the fourth indication information to the terminal device, wherein the fourth indication information is used to indicate the terminal device to determine the interval from the second interval set.

The transceiver module 92 is further configured to send indication information to the terminal device via a high layer signaling or a physical layer signaling, and the indication information is one of the first indication information to the fourth indication information.

The transceiver module 92 is further configured to carry the indication information in a designated information field or a configurable information field of the high layer signaling or the physical layer signaling.

The processing module 91 is further configured to: determine a first time domain unit where a previous reception of a TB transmitted on a PDSCH is ended; determine a second time domain unit where a scheduling signaling for the same HARQ process starts to be detected again; and determine a time domain unit between the second time domain unit and the first time domain unit as the interval.

The processing module 91 is further configured to: receive capability indication information reported by the terminal device, wherein the capability indication information is used to indicate a data demodulation capability of the terminal device; and determine the interval based on the data demodulation capability.

The transceiver module 92 is further configured to: send request information to the terminal device, and receive the capability indication information reported by the terminal device based on the request information; or in an initial access procedure or after the initial access procedure, receive the capability indication information initiatively reported by the terminal device.

Referring to FIG. 10 which is a block diagram of another communication apparatus 1000 provided in an embodiment of the present disclosure, the communication apparatus 1000 may be a network device, a terminal device (e.g., the terminal device in the above-mentioned embodiments), or a chip, a chip system or a processor which supports the network device to implement the above-mentioned method, or a chip, a chip system or a processor which supports the terminal device to implement the above-mentioned method. The communication apparatus 1000 is used to implement the above-mentioned methods, which will not be particularly defined herein.

The communication apparatus 1000 may include one or more processors 1001. The processor 1001 may be a general-purpose processor or special-purpose processor, e.g., a baseband processor or a central processing unit. The baseband processor is configured to process a communication protocol as well as communication data, and the central processing unit is configured to control the communication apparatus (e.g., a base station, a baseband chip, a terminal device, a terminal device chip, a Distributed Unit (DU) or a Centralized Unit (CU)), execute a computer program, and process data in the computer program.

Optionally, the communication apparatus 1000 further includes one or more memories 1002 storing therein a computer program 1004. The computer program 1004 is executed by the processor 1001, so that the communication apparatus 1000 implements the method described in the above-mentioned method embodiments. Optionally, the memory 1004 further stores therein data. The communication apparatus 1000 is arranged independent of, or integrated with, the memory 1002.

Optionally, the communication apparatus 1000 further includes a transceiver 1005 and an antenna 1006. The transceiver 1005 is also called as a transceiver unit, a transceiver machine or a transceiver circuit, and it is configured to achieve a transmission function and a reception function. The transceiver 1005 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 1000 further includes one or more interface circuits 1007. The interface circuit 1007 is configured to receive a code instruction and transmit it to the processor 1001. The processor 1001 executes the code instruction, so that the communication apparatus 1000 implements the method described in the above-mentioned method embodiments.

In a possible embodiment of the present disclosure, the processor 1001 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In a possible embodiment of the present disclosure, the processor 1001 stores therein a computer program 1003, and the computer program 1003 is executed by the processor 1001, so that the communication apparatus 1000 implements the method described in the above-mentioned method embodiments. The computer program 1003 may be programmed in the processor 1001, and in this case, the processor 1001 may be implemented via hardware.

In a possible embodiment of the present disclosure, the communication apparatus 1000 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device (e.g., the terminal device in the above-mentioned method embodiments), but the scope of the communication apparatus is not limited thereto. In addition, a structure of the communication apparatus is limited to that in FIG. 10. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

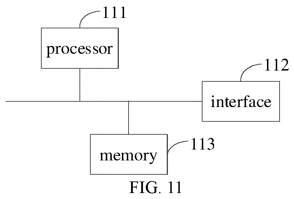

In a case that the communication apparatus is a chip or a chip system, FIG. 11 is a block diagram of the chip. As shown in FIG. 11, the chip includes a processor 111 and an interface 112. There may exist one or more processors 111, and more than one interface 112.

Optionally, the chip further includes a memory 113 for storing therein necessary computer programs and data.

The chip is used to achieve the functions in any of the above-mentioned method embodiments.

It should be appreciated that, various illustrative logical blocks and steps listed in the embodiments of the present disclosure may be implemented by electronic hardware, computer software, or a combination thereof. Whether these functions are implemented by hardware or software depends on design requirements on an entire system and specific applications. For each specific application, various methods are used to achieve the function, which however shall not be construed as going beyond the scope of the present disclosure.

The present disclosure further provides in some embodiments a system for detecting a scheduling signaling, which includes the communication apparatus as a terminal device (e.g., the terminal device in the above-mentioned embodiments) and the communication apparatus as a network device in FIG. 9, or includes the communication apparatus as a terminal device (e.g., the terminal device in the above-mentioned embodiments) and the communication apparatus as a network side device in FIG. 10.

The present disclosure further provides in some embodiments a readable storage medium storing therein an instruction. The instruction is executed by a computer to achieve the functions in any of the above method embodiments.

The present disclosure further provides in some embodiments a computer program product. The computer program product is executed by a computer to achieve the functions in any of the above method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present disclosure may be understood as "defined", "defined in advance", "stored", "pre-stored", "pre-negotiated", "preconfigured", "programmed" or "pre-programed".

It should be appreciated that, units and algorithm steps for instances described in the embodiments of the present disclosure may be implemented in the form of electronic hardware, or a combination of a computer program and electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

## Claims

1. A method for detecting a scheduling signaling, executed by a terminal device, comprising:
determining an interval for the scheduling signaling; and
not performing detection on the scheduling signaling for scheduling a transmission of the same hybrid automatic repeat reQuest (HARQ) process within the interval.

2. The method according to claim 1, further comprising:
determining the interval based on an agreement in a protocol and/or an indication from a network.

3. The method according to claim 2, further comprising:
determining a candidate interval in the agreement in the protocol as the interval; or
determining a first interval set in the agreement in the protocol; and
receiving first indication information, and determining the interval from the first interval set based on the first indication information.

4. The method according to claim 2, further comprising:
receiving second indication information sent by a network device, and determining the interval based on the second indication information.

5. The method according to claim 2, further comprising:
receiving third indication information sent by a network device, and determining a second interval set configured for the terminal device based on the third indication information; and
receiving fourth indication information sent by the network device, and determining the interval from the second interval set based on the fourth indication information.

6. The method according to any one of claims 2 to 5, further comprising:
receiving a high layer signaling or a physical layer signaling sent by the network device, and determining indication information in the high layer signaling or the physical layer signaling, wherein the indication information is one of the first indication information to the fourth indication information.

7. The method according to claim 6, further comprising:
determining the indication information in a designated information field or a configurable information field of the high layer signaling or the physical layer signaling.

8. The method according to any one of claims 1 to 7, further comprising:
determining a first time domain unit where a previous reception of a transmission block (TB) transmitted on a physical downlink shared channel (PDSCH) is ended;
determining a second time domain unit where the scheduling signaling for the same HARQ process starts to be detected again; and
determining a time domain unit between the second time domain unit and the first time domain unit as the interval.

9. The method according to any one of claims 1 to 7, further comprising:
reporting capability indication information to the network device, wherein the capability indication information is used to indicate a data demodulation capability of the terminal device, and the data demodulation capability is used by the network device to determine the interval.

10. The method according to claim 9, further comprising:
receiving request information sent by the network device, and reporting the capability indication information to the network device based on the request information; or
in an initial access procedure or after the initial access procedure, initiatively reporting the capability indication information to the network device.

11. A method for detecting a scheduling signaling, executed by a network device, comprising:
determining an interval for the scheduling signaling; and
indicating the interval to a terminal device, wherein the terminal device does not perform detection on the scheduling signaling for scheduling a transmission of the same HARQ process within the interval.

12. The method according to claim 11, further comprising:
indicating the terminal device to determine the interval from a first interval set in an agreement in a protocol based on first indication information; or
indicating the interval to the terminal device based on second indication information; or
indicating the interval to the terminal device based on third indication information and fourth indication information.

13. The method according to claim 12, further comprising:
sending the third indication information to the terminal device, wherein the third indication information is used to configure a second interval set for the terminal device; and
sending the fourth indication information to the terminal device, wherein the fourth indication information is used to indicate the terminal device to determine the interval from the second interval set.

14. The method according to claim 12 or 13, further comprising:
sending indication information to the terminal device via a high layer signaling or a physical layer signaling, wherein the indication information is one of the first indication information to the fourth indication information.

15. The method according to claim 14, further comprising:
carrying the indication information in a designated information field or a configurable information field of the high layer signaling or the physical layer signaling.

16. The method according to any one of claims 11 to 15, further comprising:
determining a first time domain unit where a previous reception of a TB transmitted on a PDSCH is ended;
determining a second time domain unit where the scheduling signaling for the same HARQ process starts to be detected again; and
determining a time domain unit between the second time domain unit and the first time domain unit as the interval.

17. The method according to any one of claims 11 to 15, further comprising:
receiving capability indication information reported by the terminal device, wherein the capability indication information is used to indicate a data demodulation capability of the terminal device; and
determining the interval based on the data demodulation capability.

18. The method according to claim 17, further comprising:
sending request information to the terminal device, and receiving the capability indication information reported by the terminal device based on the request information; or
in an initial access procedure or after the initial access procedure, receiving the capability indication information initiatively reported by the terminal device.

19. A communication apparatus, comprising:
a processing module configured to determine an interval for a scheduling signaling, wherein detection is not performed on the scheduling signaling for scheduling a transmission of the same HARQ process within the interval.

20. A communication apparatus, comprising:
a processing module configured to determine an interval for a scheduling signaling; and
a transceiver module configured to indicate the interval to the terminal device, wherein the terminal device does not perform detection on the scheduling signaling for scheduling a transmission of the same HARQ process within the interval.

21. A communication apparatus, comprising a processor and a memory, wherein the memory is configured to store therein a computer program, and the processor is configured to execute the computer program in the memory to implement the method according to any one of claims 1 to 10.

22. A communication apparatus, comprising a processor and a memory, wherein the memory is configured to store therein a computer program, and the processor is configured to execute the computer program in the memory to implement the method according to any one of claims 11 to 18.

23. A communication apparatus, comprising a processor and an interface circuit, wherein
the interface circuit is configured to receive a code instruction and send the code instruction to the processor; and
the processor is configured to execute the code instruction to implement the method according to any one of claims 1 to 10.

24. A communication apparatus, comprising a processor and an interface circuit, wherein
the interface circuit is configured to receive a code instruction and send the code instruction to the processor; and
the processor is configured to execute the code instruction to implement the method according to any one of claims 11 to 18.

25. A computer-readable storage medium storing therein an instruction, wherein the instruction is executed to implement the method according to any one of claims 1 to 10.

26. A computer-readable storage medium storing therein an instruction, wherein the instruction is executed to implement the method according to any one of claims 11 to 18.
